(19) Europäisches Patentamt
European Patent Office
Office européen des brevets

(11) **EP 0 653 833 B1**

(12) **EUROPEAN PATENT SPECIFICATION**

(45) Date of publication and mention
of the grant of the patent:
**15.09.1999 Bulletin 1999/37**

(51) Int Cl.⁶: **H02P 6/10**

(21) Application number: **94117405.4**

(22) Date of filing: **04.11.1994**

(54) **A brushless electric motor and a method for controlling the motor**

Bürstenloser elektrischer Motor und Verfahren zur Regelung des Motors

Moteur électrique sans balais et méthode pour commander le moteur

(84) Designated Contracting States:
**DE FR**

(30) Priority: **16.11.1993 IT TO930864**

(43) Date of publication of application:
**17.05.1995 Bulletin 1995/20**

(73) Proprietor: **Gate S.p.A.**
**10123 Torino (IT)**

(72) Inventor: **Acquaviva, Sebastiano**
**I-10025 Pino Torinese (Torino) (IT)**

(74) Representative: **Quinterno, Giuseppe et al**
**c/o JACOBACCI & PERANI S.p.A.**
**Corso Regio Parco, 27**
**10152 Torino (IT)**

(56) References cited:
EP-A- 0 440 534     US-A- 5 010 282
US-A- 5 191 269

- APEC 89, 17 March 1989, BALTIMORE US pages 75 - 80 R.A. MAMMANO ET AL 'DRIVING THREE-PHASE BRUSHLESS DC MOTORS - A NEW LOW LOSS LINEAR SOLUTION'

## Description

The present invention relates to a brushless electric motor, particularly to a brushless motor with low torque variation, of the kind defined in the preamble of Claim 1 and a method for controlling such a motor as defined in the preamble of Claim 18.

Brushless motors with permanent magnets are alternating-current machines having electronic commutators. The purpose of the electronic commutator is to energize the windings of the motor in the correct relationship with the induced electromotive forces, sometimes known as the EMFs, so that the motor produces an optimal torque.

In conventional direct-current motors, the number of phases of the motor is equal to the number of windings and all the phases are in series and are short-circuited to one another. The voltage/speed ratio of the motor determines the total number of turns required in the motor. Each coil must have a number of turns equal to the total number of turns of the motor divided by half the number of phases in series. Small direct-current motors (50-300 watts) may include from 6 to 20 phases.

Brushless direct-current motors require at least one electronic power switch for each phase of the motor. In order to minimize cost and the complexity of the electronics necessary for the switching, the number of phases must be minimized. In typical configurations, brushless motors have two or three phases. The performance of a three-phase, direct-current, brushless motor is comparable to that of a conventional direct-current motor. In a direct-current brushless motor, the number of turns for each phase is determined by the voltage/speed ratio of the motor and, typically, is higher than the number of turns in a conventional motor, since the phases are not in series.

The higher number of turns results in a higher phase inductance and a correspondingly higher electric time constant.

During switching, the electric time constant determines the amount of time necessary for the phase current to rise from an initial level to the desired value. The torque produced by the phase of the motor is low during the switching period because of the low energization of the phase whilst the current rises to the desired value.

If the electric time constant is high, the phase current cannot rise to the desired steady value during the period intended for the excitation of that phase at the operative speed, giving rise to low torque performance at high speed in the steady state. Moreover, the current-rise period generates a large current variation both in the motor and in the supply line. This current variation produces undesirable electrical noise and a variation of the driving torque which in turn produces undesirable acoustic noise.

A motor designed for unipolar or half-wave bridge piloting has a time constant which, typically, is twice that of a motor with the same performance designed for bipolar or full-wave bridge piloting. Current fluctuation is therefore a more serious problem for a unipolar motor/piloting arrangement than for a bipolar motor/piloting arrangement, the unipolar configuration is typically less expensive than the bipolar configuration, however, because it requires fewer switching devices. In a comparison between the unipolar configuration and the bipolar configuration, a solution to the problem of current variation is more advantageous for a unipolar motor/piloting arrangement.

Known phase-to-phase switching techniques excite only one phase of the motor at a time and produce undesirable current and torque variation during the transition periods of the switching.

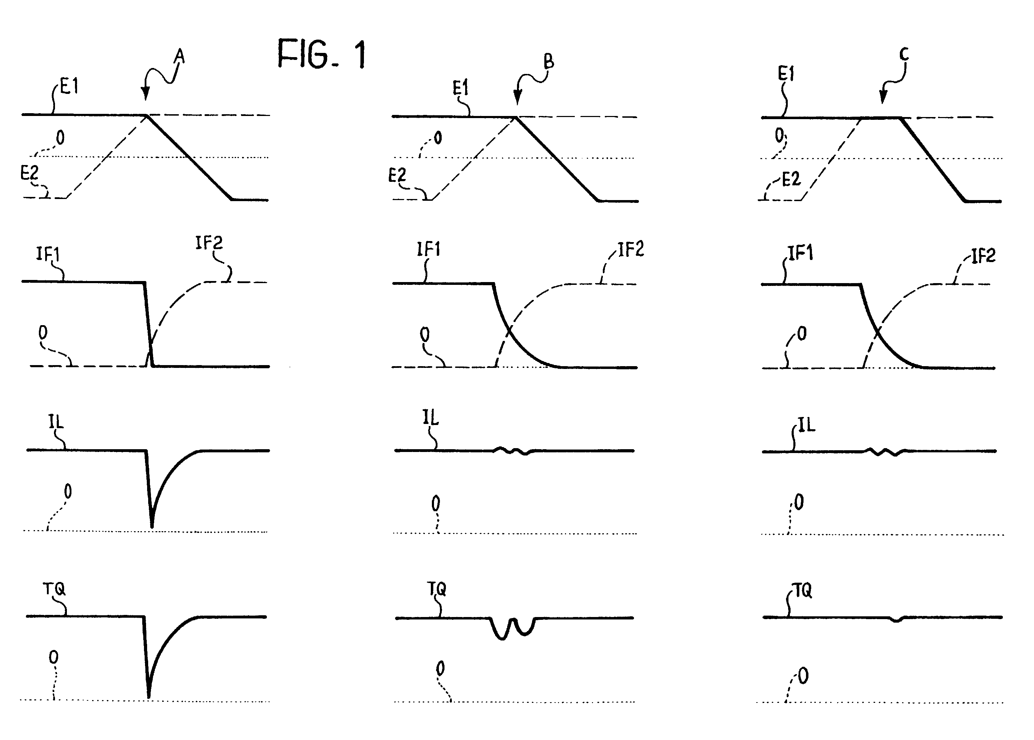

The present invention proposes a novel phase-to-phase switching method in which the two phases which are being switched are both energized in the same period, during the switching transition. A direct-current brushless motor is conventionally designed in a manner such that the waveform of the electromotive forces induced in the phases are superposed, theoretically, as shown in the first graph of column A in Figure 1. As can be seen in this time graph, when the electromotive force E1 induced in the first phase is at its maximum value, the electromotive force E2 induced in the second phase is increasing and is less than the maximum value. At the moment when the electromotive force E2 reaches the maximum value, the electromotive force E1 starts to decrease. In practice, at any moment except the moments of transition, there is one, and only one, electromotive force at the maximum value.

The currents IF1 and IF2 in the two phases are shown in the second time graph of column A. As can be seen, at the moment of transition, the current IF1 in the first phase falls to 0 with an almost vertical trailing edge. The current IF2 in the second phase, on the other hand, rises more gradually, the rate at which it rises to the maximum value being determined by the electric time constant discussed above.

This means that the line current IL which is shown in the third time graph, and is given by the sum of the phase currents IF1 and IF2, is not constant but has a "gap" at the moment of transition.

The torque TQ produced by the motor and shown in the fourth time graph consequently has a gap, that is, it has a curve substantially similar to the curve of the line current IL.

These variations or gaps in the line current constitute a technical problem since they give rise to electrical noise and electromagnetic interference the filtering of which necessitates additional components. Moreover, the variation of the line current produces a corresponding fluctuation in the torque produced, which in turn generates undesired acoustic noise and a low mean torque value, which lowers the performance of the motor.

US-A-5 191 269 discloses a brushless motor of the kind defined in the preamble of Claim 1, in which the torque ripple which occurs when commutating between phases is substantially reduced by controlling the phase being de-energised and the phase being energised so that the total current flowing in these phases is kept at a constant value. This is achieved by simultaneously controlling both the rate of turn -off of the current of the phase being de-energised and the rate of turn on of the current flowing in the phase being energised. Conduction in each phase is controlled by a respective transistor which is driven by a feedback operational amplifier through a respective slew rate control circuit including a current integrator. The feedback amplifier has a first input coupled to a resistor for sensing the total current flowing in the motor and a second input connected to a reference voltage. The slew rate control circuits are switched on and off by signals provided by position sensors associated with the rotor of the motor. In this prior motor when a first phase is to be de-energised while a second phase is being energised, the slew rate control circuit associated with the first phase drives the corresponding transistor so that the drain voltage thereof increases according to a linear voltage ramp until the phase current flowing through that transistor is completely off. At the same time the transistor coupled to the second phase to be energised is made conductive and becomes part of a feedback loop which forces through that phase the current necessary to keep the voltage on the current sensing resistor at a constant value. Thus in this prior brushless motor the total current following through the motor is kept constant during commutation between phases. This is however achieved by imposing to both the currents flowing in the phases involved to follow respective time variation laws, specifically the current in the phase being de-energised is made decrease in accordance with a first forced time law imposed by the corresponding slew rate control circuit and the current in the phase being energised is made increase according to a second forced time law imposed by the feedback loop.

The object of the present invention is to provide an improved direct-current brushless motor and a control method for such a motor which enable all the problems indicated above to be solved in a satisfactory manner.

According to the present invention, this object is achieved by a brushless motor according to Claim 1 and a method according to Claim 18.

Further advantages and characteristics of the present invention will become clear from the following detailed description, given with the aid of the appended drawings, provided by way of non-limiting example, in which:

     Figure 1 shows a series of time graphs illustrating the operating characteristics of the present invention and of the prior art and has already been partially described,

     Figure 2 is a schematic representation of an embodiment of the motor according to the present invention, in block form,

     Figure 3 is a time graph showing the operation of the embodiment of Figure 2, and

     Figure 4 is a schematic representation of an alternative embodiment of the motor according to the invention, in block form.

According to a first advantageous aspect, the present invention reduces the variation of the current and of the torque in a brushless motor designed in conventional manner, as shown in column B of the Figure 1. Since the motor is of conventional type, the electromotive forces E1, E2 which are induced in the first and second phases, and are shown in the first time graph, are identical to those for the previous case (column A).

The currents IF1, IF2 in the first and second phases, on the other hand, are controlled in a different manner. The current IF1, shown in the second time graph, does not fall to 0 abruptly as in the previous case, but decreases with a gradual curve complementary to the rising curve of the current IF2 in the second phase. The line current IL, shown in the third time graph, is thus almost constant.

The torque TQ produced, shown in the fourth time graph, consequently also has a more uniform curve with much less pronounced discontinuity than in the previous case.

The invention is implemented in an optimal manner, however, by a motor in which the electromotive forces induced are superposed as shown in column C of Figure 1. As can be seen from the first time graph in column C, in this case, there is a period of time in which both of the electromotive forces induced in the first and second phases E1, E2 are at a maximum.

The control of the phase currents IF1 and IF2, which are shown in the second time graph of column C, is identical to the previous case (column B) and the line current IL shown in the third time graph is therefore also similar to the previous case, that is, it is substantially constant.

The curve of the torque TQ produced, shown in the fourth time graph, on the other hand, is further improved; in fact, it is substantially constant, by virtue of the superposition of the induced electromotive forces E1, E2.

These curves of the induced electromotive forces E1, E2 are easily achieved and, as stated above, have superposition regions in which the induced electromotive forces E1, E2 of the two phases are both at the maximum.

In the present invention, the excitation of the phase to be cut off is maintained whilst the current in the phase to be made conductive increases to the desired value. Both of the phases are energized during this superposition period. A current-control arrangement is used to regulate the decreasing current in the phase to be cut off, in a manner such that the sum of the currents in the two phases is constant and equal to the desired operating current.

The motor and the method of the invention provide a line current with minimal line-current variation and minimal torque variation, producing minimal electrical and acoustic noise and improved performance of the motor.

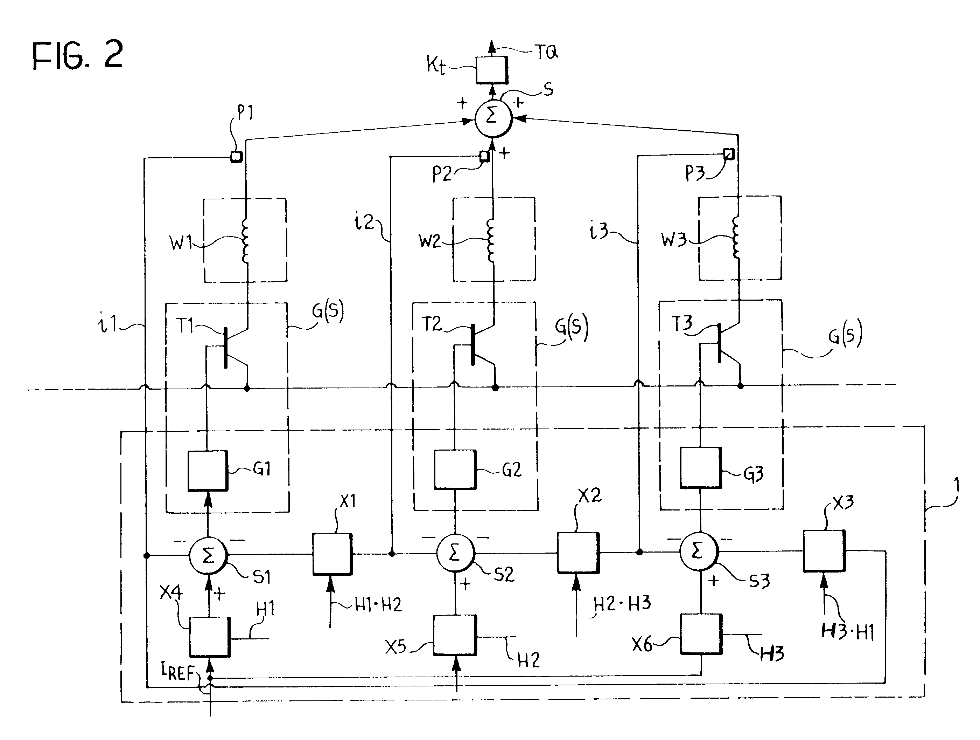

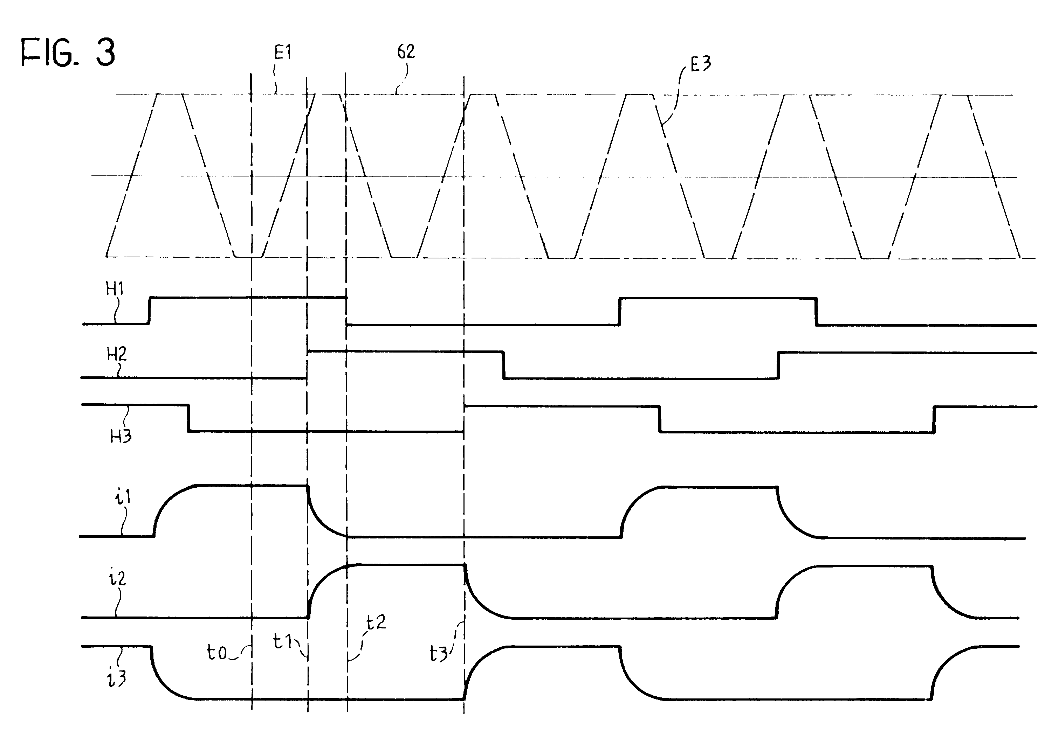

An embodiment of a current-control technique and of the system which may be used to implement the method of the invention will now be described in detail with reference to the diagram of Figure 2 and to the waveforms shown in Figure 3.

With reference to Figure 2, three current-control circuits, indicated G1, G2, G3 having transfer functions G(S), are connected, respectively, to the transistors T1, T2, T3 . Naturally, the transistors T1, T2, T3 are connected in series with the three phases or windings W1, W2, W3, the transfer functions of which are 1/(R+SL) . The signals H1, H2, H3 shown in Figure 3 are control signals used to switch the phases W1, W2, W3 at suitable moments with respect to the electromotive forces E1, E2, E3 in the phases and in accordance with the method described herein.

As can be seen from Figure 3, the three control signals H1, H2, H3 are logic signals and have time curves substantially similar to the curves of the electromotive forces E1, E2, E3 induced in the phases, respectively. That is, when the electromotive force E1, for example, has a high value (greater than a reference threshold), the control signal H1 is at a high logic value and, conversely, when the electromotive force E1 does not have a high value, the control signal H1 is at a low logic value.

The signals H1, H2, H3 can be produced, for example, by detecting the induced electromotive forces E1, E2, E3 and comparing them with a reference or threshold value, or by means of Hall-effect sensors. The signals H1, H2, H3 supply data relating to the angular position of the rotor of the motor and are used, in the method, for synchronization.

The current waveforms i1, i2, i3 show the operation of the method according to the invention. Both the currents in the phases W1, W2, W3, and the signals which are indicative of these currents and are used in the control system, will be indicated i1, i2, i3 below.

It is assumed that, for example, at a given moment, the phase W1 is energized, as shown in the initial portion of the graph of Figure 3 (time t0). At this moment, the induced electromotive force E1 is at its maximum value and the logic signal H1 is at the high logic level, whereas the other two logic signals H2 and H3 are at the low level.

A single positive signal, that is, a reference signal Iref consequently reaches the adding node S1. This is because the system has a combination circuit X4 which is controlled by the logic signal H1 and thus outputs the reference signal Iref which it receives at its input. The combination circuits X1 to X6 in fact output an analogue signal received at their inputs if the logic control signal is high; if, on the other hand, the logic control signal is low, they output a zero signal. The reference signal Iref supplied to the control system 1 is indicative of the desired current value in the motor.

As can be seen, the two combination circuits X5 and X6 are controlled by the logic signals H2 and H3 and their outputs are thus zero. The outputs of the combination circuits X1, X2, X3 are also zero since they are controlled by the AND logic signals of the pairs of signals H1, H2; H2, H3; and H3, H1, respectively. The control circuit G1 thus receives an error signal which is given by the reference signal Iref from which a signal i1 indicative of the current in the phase W1 is subtracted in the adding node S1.

The current in the phases W1, W2, W3 is in fact controlled by means of the signals i1, i2, i3 which are indicative of the currents in the phases. The signals i1, i2 i3 are detected by current sensors P1, P2, P3, for example, shunt sensors.

The control circuit G1 consequently regulates the current in the phase W1 to a value equal to the value supplied by the reference signal Iref.

Clearly, the other two phases W2, W3 are cut off since the respective adding nodes S2, S3 receive only zero signals and the inverted signals i2, i3 as feedback.

To complete the diagram, the currents i1, i2, i3 in the phases W1, W2, W3 meet at an adding node S, the output of which is therefore the total current absorbed by the motor. Essentially, this current absorbed by the motor generates the torque TQ produced by the motor, as shown schematically by the block Kt which represents the transformation of current to torque.

The phase-to-phase switching from the phase W1 to the phase W2 starts at the time t1, at which the logic signal H2 becomes high. In fact, starting from the time t1, the combination circuits X1 and X5 also become active in addition to X4, whilst the others, that is X2, X3, X6 remain inactive. The adding node S2 consequently receives the reference signal Iref, naturally as well as the feedback signal i2, which means that the current i2 in the phase W2 increases, without being limited in any way by the control circuit G2, until it reaches the value given by the signal Iref. The behaviour of the current i2 in the phase W2 is thus limited only by the electric time constant.

The control of the phase W1, on the other hand, changes because of the activation of the combination circuit X1. In fact, with the circuit X1 activated, the signal i2 which is indicative of the current in the phase W2, also enters the adding node S1, but inverted, that is, as feedback. The control circuit G1, operating in a closed loop, thus controls the value of the current in the phase W1 using Iref-i2 as a reference, which means that the trailing edge of the current is equal to the value Iref minus the current i2.

In practice, the current i2 is subtracted from the current i1 which is thus given by the equation:

$$i1 = Iref - i2$$

and thus decreases with a curve complementary to the rising curve of the current i2, as can be seen from the graph of Figure 3.

The line current, which is given by the sum of the currents in the phases, can thus only remain equal to the value of the signal Iref. The current i2 in the phase W2 thus increases at a rate determined by the electric time constant and by the supply voltage available, and the current i1 in the phase W1 is decreased by the closed-loop control arrangement to keep the sum of the currents i1 and i2 equal to the reference value Iref.

The value Iref is a predetermined reference value which, in the simplest case, is constant, and the control system 1 thus keeps the current absorbed by the motor constant. The reference value Iref may, however, also be variable over time, that is, there may be a reference signal Iref which also has the function of determining, by means of the control system 1, the value of the line current IL, that is, the total current absorbed by the motor. The signal Iref may, for example, depend on the number of revolutions or the torque of the motor.

The time t2 is the maximum limit up to which the phase W1 is permitted to remain conductive. In fact, at the time t2, the logic signal H1 becomes low so that the only logic signal which remains high is the signal H2. This situation is exactly the same as that described initially, in which the phase W1 was energized and only the logic signal H1 was high. In this case, naturally, the only phase energized is the phase W2, since the only combination circuit which is active is X5, since it is controlled by the logic signal H2, whilst all the other combination circuits are inactive. Consequently, the only adding node which receives a positive signal, that is, Iref, is the node S2, and the corresponding control circuit G2 thus tries to bring the current i2 in the phase W2 to the value given by Iref.

If the current i2 reaches a value equal to Iref before the time t2, in practice, the phase W1 is cut off by the control circuit G1 and only the phase W2 remains energized. The combination of the electric time constant, the supply voltage available, and the operative speed of the motor, may possibly be such that the current i2 does not reach the value of Iref before the time t2. However, the current i1 is in any case cut off at the time t2 by the de-activation of the combination circuit X4. After the time t2 when the phase W1 is cut off, only the phase W2 remains energized until the time t3 when the next phase-to-phase switching from the phase W2 to the phase W3 takes place exactly as described for the phases W1 and W2.

The times t1 and t2 may be fixed or may be variable in dependence on the current and/or the speed of the motor, or in dependence on another parameter.

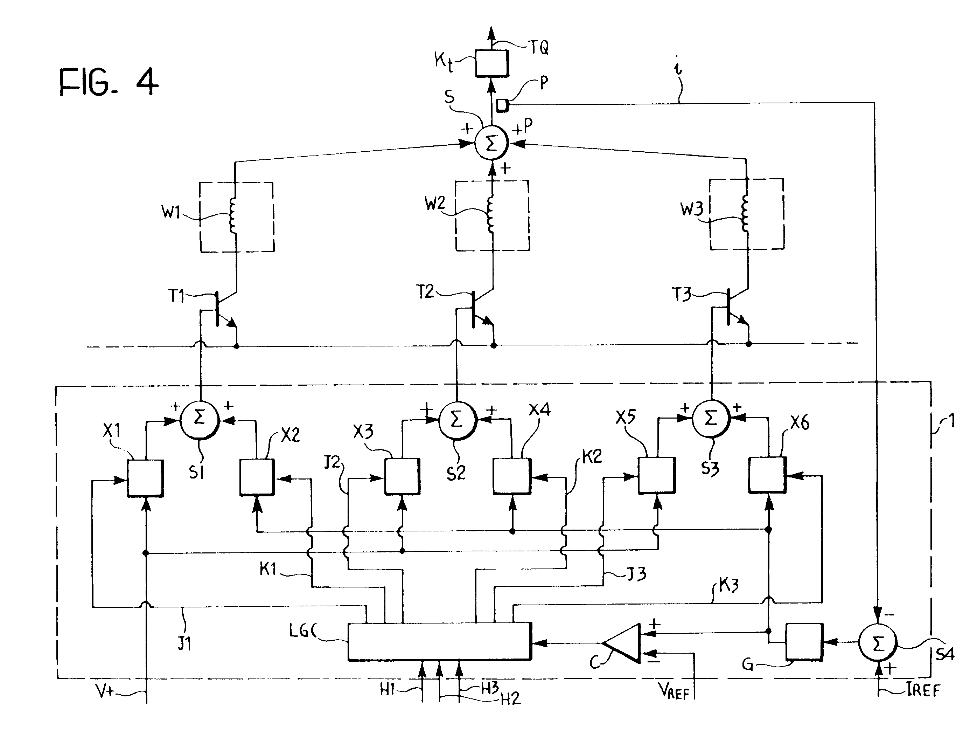

Another embodiment of a current-control system which may be used to implement the method of the invention is shown in Figure 4. In Figure 4, parts and elements already described with reference to Figure 2 have again been given the same alphabetical and/or numerical symbols. In this embodiment, the system 1 comprises only one loop for controlling the current instead of three as in the previous case and there is correspondingly only one current-control circuit G instead of three. The method implemented, however, is substantially the same, the waveforms shown in Figure 3 apply, and only the differences with respect to the previous embodiment will be described below.

In this embodiment, the total current i flowing in the phases W1, W2, W3 is detected by the sensor P and is subtracted from the reference signal Iref in the adding node S4. An error signal is thus generated and is supplied to the control circuit G. If only one of the phases is energized, for example, the phase W1, the signal generated by the control circuit G is supplied only to the transistor T1 by means of the combination circuit X2 and the adding node S1, whilst all the other combination circuits, and consequently all the other phases, are inactive.

The combination circuits X1, X2, X3, X4, X5, X6 are controlled, respectively, by the logic signals J1, K1, J2, K2, J3, K3, which are generated by a logic circuit LGC on the basis of the logic control signals H1,H2, H3. The logic circuit LGC controls the combination circuits X1 to X6 in a manner such that the behaviour of the control system 1 is substantially similar to that of the previous embodiment.

For example, if it is assumed that the phase W1 is energized in the steady state by means of the signal K1, the logic circuit LGC activates the logic signal J2 at the time t1, thus sending the signal V+ to the transistor T2. This causes the phase W2 to be energized and the current therein starts to increase without being limited by the control circuit G, but only by the electric time constant. Since the phase W1 is controlled by the control circuit G which tries to keep the total current i equal to Iref, the current in the phase W1 is consequently reduced, that is, in practice, the current which starts to flow in the phase W2 is subtracted from the current in the phase W1.

At the time t2, the logic circuit LGC successively deactivates the signal K1, cutting off the phase W1, deactivates the signal J2 and activates the signal K2, so that the phase W2 is no longer energized by the signal V+ without control, but by the signal output by the control circuit G, by means of the combination circuit X4, thus bringing the phase W2 into steady-state operation.

Since the current in the phase W2 may exceed the value Iref before the time t2 at which it is made subject to the control of the circuit G because, in practice, it is not subject to any control during the period between the moments t1 and t2, the system 1 has a mechanism for intervening in such situations.

The system 1 in fact comprises a comparator C for detecting the moment at which the increasing current in the phase W2 has reached the value given by Iref, should this value be reached before the time t2 at which it would be made subject to the control circuit G.

This condition is detected by comparing the signal output of the control circuit G with a reference value Vref. In fact, at the moment when the current in the phase W2 exceeds the value Iref, the control circuit G tries to control the current in the phase W1 with a negative value. This event is detected by the comparator C. The output of the comparator C is connected to the logic circuit LGC so that, at the moment at which the aforesaid event is detected, the logic circuit LGC effects, in advance, all the operations programmed for the moment t2. As can be seen, the system 1 described in this alternative embodiment is thus functionally identical to the control system 1 of the previous embodiment but has a different configuration.

The method according to the invention may be used in a wholly equivalent manner with pulse-width modulated current control (PWM).

The current increasing in the phase to be energized can be controlled in a manner similar to that described above.

The main advantages of the present invention in comparison with the prior art are the following:

- this technique makes the "next phase" conductive before cutting off the conducting phase, thus bringing about a current flow in two phases simultaneously for a short period of time during switching. A current-control arrangement is used to "shape" the decreasing current (or the increasing current) to the desired curve. The current superposition technique achieves:

- less current variation and shorter rise times of the current controlled;

- less torque variation resulting from the superposed-current control arrangement;

- less acoustic noise resulting from the reduced torque variation;

- less electrical noise (EMI) resulting from the reduced current variation

   . and from the controlled current-rise times, enabling filtering components to be reduced to a minimum and both space and cost requirements to be reduced;

- improved mean torque and performance of the motor because of the reduction of the "gap" in the current during switching;

- reduced magnetostriction and electrodynamic stress resulting from the controlled current-rise times.

## Claims

1. A direct current brushless motor comprising a plurality of windings or phases (W1, W2, W3) and a control system (1) for energising the said phases (W1, W2, W3) sequentially in a manner such that during the de-energising of a first phase (W1, W2, W3) and the energising of a second phase (W2, W3, W1) there is a period of time in which said first (W1, W2, W3) and second phases (W2, W3, W1) are both energised and the sum of the currents in said first (W1, W2, W3) and second phases (W2, W3, W1) equals a predetermined reference signal (Iref);

    characterised in that said control system (1) is configured for letting, in said period of time, the current in said second phase (W2, W3, W1) to freely increase according to the electric time constant of said second phase (W2, W3, W1) until said current reaches the value corresponding to said reference signal (Iref).

2. A motor according to Claim 1, characterized in that the reference signal (Iref) is substantially constant.

3. A motor according to Claim 1, characterized in that the reference signal (Iref) is dependent on the rate of revolution of the motor.

4. A motor according to Claim 1, characterized in that the reference signal (Iref) is dependent on the torque of the motor.

5. A motor according to any one of Claims 1 to 4, characterized in that the sum of the currents in the first and second phases is substantially equal to the value of the current in the first and second phases when they are energized individually.

6. A motor according to Claim 5, characterized in that the control system (1) is configured for controlling the current by pulse-width modulation.

7. A motor according to Claim 5 or Claim 6, characterized in that the control system (1) is configured for controlling the current in a closed loop.

8. A motor according to any one of Claims 1 to 7, characterized in that the control system (1) comprises current-sensor means (P) for detecting the current (IL) absorbed by the motor.

9. A motor according to Claim 7 or Claim 8, characterized in that the control system (1) comprises further current-sensor means (P1, P2, P3) for detecting the currents (i1, i2, i3) in the phases (W1, W2, W3).

10. A motor according to Claim 8 or Claim 9, characterized in that the sensor means (P) and the further current-sensor means (P1, P2, P3) comprise shunt sensors.

11. A motor according to any one of Claims 1 to 10, characterized in that the period of time during which the first and second phases are both energized is determined on the basis of logic control signals (H1, H2,H3) indicative of the angular position of the rotor of the motor.

12. A motor according to Claim 11, characterized in that the logic control signals (H1, H2, H3) are generated on the basis of the electromotive forces (E1, E2, E3) induced in the phases (W1, W2, W3) of the motor.

13. A motor according to Claim 12, characterized in that the logic control signals (H1, H2, H3) are generated by comparing the induced electromotive forces (E1, E2, E3) with a reference value.

14. A motor according to Claim 11, characterized in that the logic control signals (H1, H2, H3) are generated by Hall-effect position sensors.

15. A motor according to any one of Claims 11 to 14, characterized in that the control logic signals (H1, H2, H3) are variable in order to modify the time period.

16. A motor according to Claim 15, characterized in that the logic control signals (H1, H2, H3) are variable in dependence on the rate of rotation of the motor and/or on the current absorbed by the motor.

17. A motor according to Claim 1, characterized in that the control system (1) is configured in a manner such that, in the said time period, if the current flowing through the second phase exceeds the value determined by the reference signal (Iref), it is made subject to the control of a closed-loop current control arrangement and the first phase is cut off.

18. A method of controlling a direct-current brushless electric motor comprising a plurality of phases (W1, W2, W3), in which the phases (W1, W2, W3) are energized sequentially, comprising the step of energizing the phases (W1, W2, W3) in a manner such that: during the de-energizing of a first phase and the energizing of a second phase, there is a period of time in which the first and second phases are both energized, and the sum of the currents in said first and second phases is substantially equal to a predetermined reference signal (Iref); characterized in that in said period of time the current in said second phase is let to freely increase according to the electric time constant of said second phase until said current reaches the value corresponding to said reference signal (Iref).

19. A method according to Claim 18, characterized in that the reference signal is substantially constant.

20. A method according to Claim 18, characterized in that the reference signal (Iref) is dependent on the rate of revolution of the motor.

21. A method according to Claim 18, characterized in that the reference signal (Iref) is dependent on the torque of the motor.

22. A method according to any one of Claims 18 to 21, characterized in that the sum of the currents in the first and second phases is substantially equal to the value of the current in the first and second phases when they are energized individually.

23. A method according to Claim 22, characterized in that it comprises the step of controlling the current by pulse-width modulation.

24. A method according to Claim 22 or Claim 23, characterized in that it comprises the step of the closed-loop control of the current.

25. A method according to any one of Claims 18 to 24, characterized in that it comprises the step of detecting the current (IL) absorbed by the motor.

26. A method according to Claim 25, characterized in that it comprises the step of detecting the currents (i1, i2, i3) in the phases (W1, W2, W3).

27. A method according to any one of Claims 18 to 26, characterized in that it comprises the step of determining the period of time in which the first and second phases are both energized, on the basis of logic control signals (H1, H2, H3) indicative of the angular position of the rotor of the motor.

28. A method according to Claim 27, characterized in that it comprises the step of generating the logic control signals (H1, H2, H3) on the basis of the electromotive forces (E1, E2, E3) induced in the phases (W1, W2, W3) of the motor.

29. A method according to Claim 28, characterized in that it comprises the step of generating the logic control signals (H1, H2, H3) by comparing the induced electromotive forces (E1, E2, E3) with a reference value.

30. A method according to Claim 27, characterized in that it comprises the step of generating the logic control signals (H1, H2, H3) by means of Hall-effect position sensors.

31. A method according to any one of Claims 27 to 30, characterized in that it comprises the step of varying the logic control signals (H1, H2, H3) in order to modify the time period.

32. A method according to Claim 31, characterized in that it comprises the step of varying the logic control signals (H1, H2, H3) in dependence on the speed of rotation of the motor and/or the current absorbed by the motor.

33. A method according to Claim 18, characterized in that, if the current flowing through the second phase exceeds the value determined by the reference signal (Iref) during the said time period, it comprises the step of making said current subject to the control of a closed-loop current control arrangement and cutting off the first phase.

**Patentansprüche**

1. Bürstenloser Gleichstrommotor mit einer Mehrzahl von Wicklungen oder Phasen (W1, W2, W3) und einem Steuersystem (1) zur aufeinanderfolgenden Stromversorgung der Phasen (W1, W2, W3) auf eine Weise, daß während des Abtrennens einer ersten Phase (W1, W2, W3) von der Stromquelle und der Stromversorgung einer zweiten Phase (W2, W3, W1) eine Zeitperiode besteht, in welcher sowohl die erste (W1, W2, W3) als auch die zweite Phase (W2, W3, W1) mit Strom versorgt werden und die Summe der Ströme in der ersten (W1, W2, W3) und zweiten Phase (W2, W3, W1) gleich einem vorbestimmten Referenzsignal (Iref) ist; dadurch gekennzeichnet, daß das Steuersystem (1) dazu ausgelegt ist, den freien Anstieg des Stroms in der zweiten Phase (W2, W3, W1) gemäß der elektrischen Zeitkonstante der zweiten Phase (W2, W3, W1) in dieser Zeitperiode zuzulassen, bis der Strom den dem Referenzsignal (Iref) entsprechenden Wert erreicht.

2. Motor nach Anspruch 1, dadurch gekennzeichnet, daß das Referenzsignal (Iref) im wesentlichen konstant ist.

3. Motor nach Anspruch 1, dadurch gekennzeichnet, daß das Referenzsignal (Iref) von der Umdrehungsrate des Motors abhängt.

4. Motor nach Anspruch 1, dadurch gekennzeichnet, daß das Referenzsignal (Iref) vom Drehmoment des Motors abhängt.

5. Motor nach einem der Ansprüche 1 bis 4, dadurch gekennzeichnet, daß die Summe der Ströme in der ersten und zweiten Phase im wesentlichen gleich dem Wert des Stroms in der ersten und zweiten Phase ist, wenn diese einzeln mit Strom versorgt werden.

6. Motor nach Anspruch 5, dadurch gekennzeichnet, daß das Steuersystem (1) zur Steuerung des Stroms durch Pulsbreiten-Modulation ausgelegt ist.

7. Motor nach Anspruch 5 oder Anspruch 6, dadurch gekennzeichnet, daß das Steuersystem (1) zur Steuerung des Stroms in einem geschlossenen Kreis ausgelegt ist.

8. Motor nach einem der Ansprüche 1 bis 7, dadurch gekennzeichnet, daß das Steuersystem (1) eine Stromabtastvorrichtung (P) zur Detektion des vom Motor aufgenommenen Stroms (IL) umfaßt.

9. Motor nach Anspruch 7 oder Anspruch 8, dadurch gekennzeichnet, daß das Steuersystem (1) weitere Stromabtastvorrichtungen (P1, P2, P3) zur Detektion der Ströme (i1, i2, i3) in den Phasen (W1, W2, W3) umfaßt.

10. Motor nach Anspruch 8 oder Anspruch 9, dadurch gekennzeichnet, daß die Abtastvorrichtung (P) und die weiteren Stromabtastvorrichtungen (P1, P2, P3) Nebenschlußsensoren umfassen.

11. Motor nach einem der Ansprüche 1 bis 10, dadurch gekennzeichnet, daß die Zeitperiode, während der sowohl die erste als auch die zweite Phase mit Strom versorgt werden, auf Basis von die Winkelposition des Rotors des Motors anzeigenden logischen Steuersignalen (H1, H2, H3) bestimmt wird.

12. Motor nach Anspruch 11, dadurch gekennzeichnet, daß die logischen Steuersignale (H1, H2, H3) auf Basis der in den Phasen (W1, W2, W3) des Motors induzierten elektromotorischen Kräfte (E1, E2, E3) erzeugt werden.

13. Motor nach Anspruch 12, dadurch gekennzeichnet, daß die logischen Steuersignale (H1, H2, H3) durch Vergleichen der induzierten elektromotorischen Kräfte (E1, E2, E3) mit einem Referenzwert erzeugt werden.

14. Motor nach Anspruch 11, dadurch gekennzeichnet, daß die logischen Steuersignale (H1, H2, H3) durch Halleffekt-Positionssensoren erzeugt werden.

15. Motor nach einem der Ansprüche 11 bis 14, dadurch gekennzeichnet, daß die logischen Steuersignale (H1, H2, H3) zwecks Modifizierens der Zeitperiode variabel sind.

16. Motor nach Anspruch 15, dadurch gekennzeichnet, daß die logischen Steuersignale (H1, H2, H3) in Abhängigkeit von der Umdrehungsrate des Motors und/oder des vom Motor aufgenommenen Stroms variabel sind.

17. Motor nach Anspruch 1, dadurch gekennzeichnet, daß das Steuersystem (1) derart ausgelegt ist, daß es in dieser Zeitperiode der Steuerung eines geschlossenen Regelkreisstromsystems unterworfen und die erste Phase abgetrennt wird, wenn der durch die zweite Phase fließende Strom den vom Referenzsignal (Iref) bestimmten Wert überschreitet.

18. Verfahren zum Steuern eines bürstenlosen Gleichstromelektromotors mit einer Mehrzahl von Phasen (W1, W2, W3), worin die Phasen (W1, W2, W3) nacheinander mit Strom versorgt werden, umfassend den Schritt der Stromversorgung der Phasen (W1, W2, W3) auf eine Weise, daß: während des Abtrennens einer ersten Phase von der Stromquelle und der Versorgung einer zweiten Phase mit Strom eine Zeitperiode besteht, in welcher sowohl die erste als auch die zweite Phase mit Strom versorgt werden, und die Summe der Ströme in der ersten und zweiten Phase im wesentlichen gleich einem vorbestimmten Referenzsignal (Iref) ist; dadurch gekennzeichnet, daß in dieser Zeitperiode der Strom in der zweiten Phase gemäß der elektrischen Zeitkonstante der zweiten Phase frei steigen darf, bis der Strom den dem Referenzsignal (Iref) entsprechenden Wert erreicht.

19. Verfahren nach Anspruch 18, dadurch gekennzeichnet, daß das Referenzsignal im wesentlichen konstant ist.

20. Verfahren nach Anspruch 18, dadurch gekennzeichnet, daß das Referenzsignal (Iref) von der Umdrehungsrate des Motors abhängt.

21. Verfahren nach Anspruch 18, dadurch gekennzeichnet, daß das Referenzsignal (Iref) vom Drehmoment des Motors abhängt.

22. Verfahren nach einem der Ansprüche 18 bis 21, dadurch gekennzeichnet, daß die Summe der Ströme in der ersten und zweiten Phase im wesentlichen gleich dem Wert des Stroms in der ersten und zweiten Phase ist, wenn diese einzeln mit Strom versorgt werden.

23. Verfahren nach Anspruch 22, dadurch gekennzeichnet, daß es den Schritt der Stromsteuerung durch Pulsbreiten-Modulation umfaßt.

24. Verfahren nach Anspruch 22 oder Anspruch 23, dadurch gekennzeichnet, daß es den Schritt der Stromsteuerung in einem geschlossenen Kreis umfaßt.

25. Verfahren nach einem der Ansprüche 18 bis 24, dadurch gekennzeichnet, daß es den Schritt des Ermittelns des vom Motor aufgenommenen Stroms (IL) umfaßt.

26. Verfahren nach Anspruch 25, dadurch gekennzeichnet, daß es den Schritt des Ermittelns der Ströme (i1, i2, i3) in den Phasen (W1, W2, W3) umfaßt.

27. Verfahren nach einem der Ansprüche 18 bis 26, dadurch gekennzeichnet, daß es den Schritt des Bestimmens der Zeitperiode, in welcher sowohl die erste als auch die zweite Phase mit Strom versorgt werden, auf Basis von die Winkelposition des Rotors des Motors anzeigenden logischen Steuersignalen (H1, H2, H3) umfaßt.

28. Verfahren nach Anspruch 27, dadurch gekennzeichnet, daß es den Schritt des Erzeugens der logischen Steuersignale (H1, H2, H3) auf Basis der in den Phasen (W1, W2, W3) des Motors induzierten elektromotorischen Kräfte (E1, E2, E3) umfaßt.

29. Verfahren nach Anspruch 28, dadurch gekennzeichnet, daß es den Schritt des Erzeugens der logischen Steuersignale (H1, H2, H3) durch Vergleichen der induzierten elektromotorischen Kräfte (E1, E2, E3) mit einem Referenzwert umfaßt.

30. Verfahren nach Anspruch 27, dadurch gekennzeichnet, daß es den Schritt des Erzeugens der logischen Steuersignale (H1, H2, H3) mittels Halleffekt-Positionssensoren umfaßt.

31. Verfahren nach einem der Ansprüche 27 bis 30, dadurch gekennzeichnet, daß es den Schritt des Veränderns der logischen Steuersignale (H1, H2, H3) zwecks Modifizierens der Zeitperiode umfaßt.

32. Verfahren nach Anspruch 31, dadurch gekennzeichnet, daß es den Schritt des Veränderns der logischen Steuersignale (H1, H2, H3) in Abhängigkeit von der Umdrehungsgeschwindigkeit des Motors und/oder des vom Motor aufgenommenen Stroms umfaßt.

**33.** Verfahren nach Anspruch 18, dadurch gekennzeichnet, daß es den Schritt des Unterwerfens des Stroms der Steuerung eines geschlossenen Regelkreisstromsystems und des Abtrennens der ersten Phase umfaßt, wenn der durch die zweite Phase fließende Strom während dieser Zeitperiode den vom Referenzsignal (Iref) bestimmten Wert überschreitet.

**Revendications**

**1.** Moteur à courant continu sans collecteur comprenant plusieurs bobinages ou phases (W1, W2, W3) et un système de commande (1) pour alimenter lesdites phases (W1, W2, W3) de façon séquentielle de telle sorte que lors de la suppression de l'alimentation d'une première phase (Wl, W2, W3) et l'alimentation d'une seconde phase (W2, W3, W1), il y a un laps de temps pendant lequel lesdites première (W1, W2, W3) et seconde phases (W2, W3, Wl) sont alimentées toutes les deux et la somme des courants desdites première (W1, W2, W3) et seconde phases (W2, W3, W1) est égale à un signal de référence prédéterminé (Iref) ; caractérisé en ce que ledit système de commande (1) est configué de façon à permettre, pendant ledit laps de temps, au courant de ladite seconde phase (W2, W3, W1) d'augmenter librement, selon la constante de temps électrique de ladite seconde phase (W2, W3, W1), jusqu'à ce que ledit flux du courant atteigne la valeur correspondant audit signal de référence (Iref).

**2.** Moteur selon la revendication 1, caractérisé en ce que le signal de référence (Iref) est sensiblement constant.

**3.** Moteur selon la revendication 1, caractérisé en ce que le signal de référence (Iref) dépend de la vitesse de rotation du moteur.

**4.** Moteur selon la revendication 1, caractérisé en ce que le signal de référence (Iref) dépend du couple du moteur.

**5.** Moteur selon l'une quelconque des revendications 1 à 4, caractérisé en ce que la somme des courants des première et seconde phases est très sensiblement égale à la valeur du courant des première et seconde phases lorsqu'elles sont alimentées séparément.

**6.** Moteur selon la revendication 5, caractérisé en ce que le système de commande (1) est configuré pour contrôler le courant par modulation de largeur d'impulsions.

**7.** Moteur selon la revendication 5 ou 6, caractérisé en ce que le système de commande (1) est configuré pour contrôler le courant en boucle fermée.

**8.** Moteur selon l'une quelconque des revendications de 1 à 7, caractérisé en ce que le système de commande (1) comprend des moyens de détection de courant (P) pour détecter le courant (IL) absorbé par le moteur.

**9.** Moteur selon la revendication 7 ou 8, caractérisé en ce que le système de commande (1) comprend d'autres moyens de détection de courant (P1, P2, P3) pour détecter les courants (i1, i2, i3) des phases (W1, W2, W3).

**10.** Moteur selon la revendication 8 ou 9, caractérisé en ce que les moyens de détection (P) et les autres moyens de détection de courant (P1, P2, P3) comprennent des détecteurs de shunt.

**11.** Moteur selon l'une quelconque des revendications 1 à 10, caractérisé en ce que le laps de temps pendant lequel les première et seconde phases sont alimentées est déterminé en fonction de signaux de commandes logiques (H1, H2, H3) qui indiquent la position angulaire du rotor du moteur.

**12.** Moteur selon la revendication 11, caractérisé en ce que les signaux de commandes logiques (H1, H2, H3) sont générés en fonction des forces électromotrices (E1, E2, E3) induites dans les phases (W1, W2, W3) du moteur.

**13.** Moteur selon la revendication 12, caractérisé en ce que les signaux de commandes logiques (H1, H2, H3) sont générés en comparant les forces électromotrices (E1, E2, E3) induites avec une valeur de référence.

**14.** Moteur selon la revendication 11, caractérisé en ce que les signaux de commandes logiques (H1, H2, H3) sont générés par des détecteurs de position à effet Hall.

**15.** Moteur selon l'une quelconque des revendications 11 à 14, caractérisé en ce que les signaux de commandes logiques (H1, H2, H3) sont variables pour modifier le laps de temps.

**16.** Moteur selon la revendication 15, caractérisé en ce que les signaux de commandes logiques (H1, H2, H3) varient en fonction de la vitesse de rotation du moteur et/ou du courant absorbé par le moteur.

**17.** Moteur selon la revendication 1, caractérisé en ce que le système de commande (1) est configuré de telle façon que, lors dudit laps de temps, si le flux du courant passant dans la seconde phase est supérieur à la valeur déterminée par le signal de référence (Iref), celui-ci est soumis au contrôle d'un agencement de commande de courant en boucle fermée et la première phase est coupée.

18. Procédé de contrôle d'un moteur électrique à courant continu sans collecteur comprenant une pluralité de phases (W1, W2, W3), dans lequel les phases (W1, W2, W3) sont alimentées de façon séquentielle, comprenant l'étape consistant à alimenter les phases (W1, W2, W3) de telle sorte que : lors de l'interruption de l'alimentation d'une première phase et de l'alimentation d'une seconde phase, il y a un laps de temps pendant lequel les première et seconde phases sont alimentées toutes les deux, et la somme des courants desdites première et seconde phases est sensiblement égale à un signal de référence prédéterminé (Iref), caractérisé en ce que, pendant ledit laps de temps, on laisse le courant de ladite seconde phase augmenter librement, selon la constante de temps électrique de ladite seconde phase, jusqu'à ce que ledit flux du courant atteigne la valeur correspondant audit signal de référence (Iref).

19. Procédé selon la revendication 18, caractérisé en ce que le signal de référence est sensiblement constant.

20. Procédé selon la revendication 18, caractérisé en ce que le signal de référence (Iref) dépend de la vitesse de rotation du moteur.

21. Procédé selon la revendication 18, caractérisé en ce que le signal de référence (Iref) dépend du couple du moteur.

22. Procédé selon l'une quelconque des revendications 18 à 21, caractérisé en ce que la somme des courants des première et seconde phases est sensiblement égale à la valeur du courant des première et deuxième phases, lorsqu'elles sont alimentées séparément.

23. Procédé selon la revendication 22, caractérisé en ce qu'il comprend l'étape de contrôle du courant par modulation de largeur d'impulsions.

24. Procédé selon la revendication 22 ou 23, caractérisé en ce qu'il comprend l'étape de contrôle du courant en boucle fermée.

25. Procédé selon l'une quelconque des revendications 18 à 24, caractérisé en ce qu'il comprend l'étape de détection du courant (IL) absorbé par le moteur.

26. Procédé selon la revendication 25, caractérisé en ce qu'il comprend l'étape de détection des courants (i1, i2, i3) dans les phases (W1, W2, W3).

27. Procédé selon l'une quelconque des revendications 18 à 26, caractérisé en ce qu'il comprend l'étape consistant à déterminer le laps de temps pendant lequel les première et seconde phases sont alimentées, en fonction des signaux de commandes logiques (H1, H2, H3) qui indiquent la position angulaire du rotor du moteur.

28. Procédé selon la revendication 27, caractérisé en ce qu'il comprend l'étape de génération des signaux de commandes logiques (H1, H2, H3) en jonction des forces électromotrices (E1, E2, E3) induites dans les phases (W1, W2, W3) du moteur.

29. Procédé selon la revendication 28, caractérisé en ce qu'il comprend l'étape de génération des signaux de commandes logiques (H1, H2, H3) en comparant les forces électromotrices induites (E1, E2, E3) avec une valeur de référence.

30. Procédé selon la revendication 27, caractérisé en ce qu'il comprend l'étape de génération des signaux de commandes logiques (H1, H2, H3) par des détecteurs de position à effet Hall.

31. Procédé selon l'une quelconque des revendications de 27 à 30, caractérisé en ce qu'il comprend l'étape de variation des signaux de commandes logiques (H1, H2, H3) pour modifier le laps de temps.

32. Procédé selon la revendication 31, caractérisé en ce qu'il comprend l'étape de modification des signaux de commandes logiques (H1, H2, H3) en fonction de la vitesse de rotation du moteur et/ou du courant absorbé par le moteur.

33. Procédé selon la revendication 18, caractérisé en ce que si le flux du courant passant dans la seconde phase est supérieur à la valeur déterminée par le signal de référence (Iref) pendant ledit laps de temps, il comprend l'étape consistant à soumettre ledit courant au contrôle d'un agencement de courant à circuit fermé et à couper la première phase.

FIG. 1

EP 0 653 833 B1

FIG. 2

EP 0 653 833 B1

FIG. 3

E1  62  E3

H1

H2

H3

i1

i2

i3

t0  t1  t2  t3

EP 0 653 833 B1

14

FIG. 4